Europäisches Patentamt

**European Patent Office**

**Office européen des brevets**

(11) Numéro de publication: **0 1 1 2 429**
**B1**

(12) **FASCICULE DE BREVET EUROPEEN**

(45) Date de publication du fascicule du brevet:
**11.03.87**

(51) Int. Cl.⁴: **H 04 L 25/48, G 08 C 19/28**

(21) Numéro de dépôt: **82430047.9**

(22) Date de dépôt: **28.12.82**

(54) Système de transmission de données par séquences répétitives.

(43) Date de publication de la demande:
**04.07.84 Bulletin 84/27**

(45) Mention de la délivrance du brevet:
**11.03.87 Bulletin 87/11**

(84) Etats contractants désignés:
**DE FR GB**

(56) Documents cités:
**FR - A - 1 371 858**
**US - A - 3 648 237**
**US - A - 4 099 163**

**1982 IEEE INTERNATIONAL AUTOMATIC TESTING CONFERENCE, 12-14 octobre 1982, Dayton, Ohio, pages 385-391, IEEE, New York, USA W. HOGAN et al.: "ATE test of spread spectrum systems" HEWLETT-PACKARD JOURNAL, vol. 27, no. 7, mars 1976, pages 18-24, Palo Alto, USA I.R. YOUNG et al.: "A 50-Mbit/s pattern generator and error detector for evaluating digital communications system performance"**

(73) Titulaire: **International Business Machines Corporation, Old Orchard Road, Armonk, N.Y. 10504 (US)**
(84) Etats contractants désignés: **DE GB**

(73) Titulaire: **Compagnie IBM FRANCE, 5 Place Vendôme, F-75000 Paris 1er (FR)**
(84) Etats contractants désignés: **FR**

(72) Inventeur: **Picard, Jean-Louis, Chemin des Mouiières, F-06480 La Colle sur Loup (FR)**

(74) Mandataire: **Bonneau, Gérard, Compagnie IBM France Département de Propriété Intellectuelle, F-06610 La Gaude (FR)**

### Description

La présente invention concerne de façon générale les systèmes de données et plus particulièrement un système de transmission de données utilisant les propriétés des séquences de «longueur maximale».

Les systèmes de transmission de données comportent maintenant de façon courante un clavier à touches, c'est-à-dire une unité d'entrée de données par points d'entrée dans laquelle un point d'entrée et un seul peut être activé à la fois, à un instant donné.

Dans un système comportant une unité d'entrée de ce genre, le problème de la transmission des données se pose. Cette transmission peut se faire de façon analogique. C'est le cas des claviers téléphoniques à touches où l'activation d'une touche entraîne la transmission d'une combinaison de plusieurs signaux de fréquences différentes, chaque touche étant associée à une combinaison particulière. Ce système de transmission analogique présente évidemment le double inconvénient d'être coûteux et encombrant au moment où les progrès de la technologie des circuits intégrés progressent rapidement dans la voie de la miniaturisation accompagnée d'une baisse considérable des coûts.

On utilise donc de plus en plus la transmission numérique des données, et principalement dans les systèmes de transmission à courte distance dans lesquels les données sont entrées par un opérateur sur un terminal comportant un clavier de type machine à écrire et transmises à un processeur pour traitement destiné à l'enregistrement sur bande ou à l'impression pour une imprimante.

La technique largement utilisée actuellement consiste à transmettre les données numériques en parallèle. Ceci nécessite un câble reliant le terminal d'entrée au processeur, comportant autant de fils qu'il y a de points d'entrée. Il est évident que ce type de câble multifil est coûteux ne serait-ce que par la nécessité d'avoir des connecteurs multibroches et n'est pas toujours pratique.

En raison des inconvénients mentionnés ci-dessus, il est donc préférable que les données numériques en provenance du terminal ou unité d'entrée soient transmises en série. Cette transmission en série peut se faire de façon asynchrone ou de façon synchrone. Le procédé de transmission asynchrone ou de façon synchrone. Le procédé de transmission asynchrone consiste à transmettre chaque caractère de données correspondant à l'activation d'un point d'entrée de façon indépendante sur la ligne, par un code débutant par un bit de début et se terminant par un ou deux bits de fin. A la réception la synchronisation se fait par reconnaissance des bits de début et de fin. Malheureusement lorsqu'il y a perte de synchronisation, celle-ci peut ne pas être perçue rapidement et entraîne une réception erronée des données.

Dans le procédé de transmission dit synchrone, les caractères de données sont enveloppés dans des suites de caractères comportant à intervalles réguliers des caractères spéciaux utilisés pour la synchronisation et servant d'indicateurs de début et éventuellement de fin pour les suites ou paquets qui sont transmis.

L'objet de la présente invention est donc un système de transmission en série de données numériques provenant d'une unité d'entrée à points d'entrée du type clavier, dans lequel la synchronisation se fait de façon simple sans nécessiter l'emploi de bits ou caractères spéciaux.

Le système de transmission de l'invention comporte, outre l'unité d'entrée à points d'entrée, un circuit de représentation numérique de la position du point d'entrée activé, une unité de transmission de données et une unité de réception de données. L'unité de transmission de données est du type de celle décrite dans le brevet FR 1 371 858 et comprend une unité de génération de séquences répétitives pour fournir de façon synchrone des bits disposés selon une séquence répétitive sur une sortie série et une configuration de bits pour chaque bit de la séquence sur une sortie parallèle, la configuration de bits étant différente pour chaque bit de ladite séquence; un circuit de coïncidence connecté d'une part à la sortie du circuit de représentation numérique et d'autre part à la sortie parallèle de l'unité de génération de séquence, pour fournir un signal de coïncidence lorsqu'il y a coïncidence entre la représentation numérique fournie à la sortie du circuit représentation numérique et la configuration de bits fournie sur la sortie parallèle de l'unité de génération de séquence; et un circuit OU exclusif connecté en entrée d'une part à la sortie du circuit de coïncidence et d'autre part à la sortie série de l'unité de génération de séquence, de façon à fournir en sortie les séquences de bits engendrés par l'unité de génération de séquence excepté lorsque le circuit de coïncidence fournit un signal de coïncidence indiquant qu'un des points d'entrée de l'unité d'entrée a été activé, auquel cas le bit à transmettre est inversé.

L'unité de réception de données, telle que caractérisée dans les revendications, comprend une unité de génération de séquence identique à l'unité de génération de séquence de l'unité de transmission de données, comportant également une sortie série fournissant les mêmes séquences répétitives et une sortie parallèle fournissant les mêmes configurations binaires; un circuit OU exclusif connecté en entrée à la ligne de transmission de données provenant du système de transmission de données et à la sortie de l'unité de génération de séquence de façon à fournir en sortie un bit «zéro» lorsqu'il n'y a pas de données transmises et un bit «un» dès qu'un bit a été altéré indiquant la présence d'un bit de données; un registre pour charger la configuration binaire fournie sur la sortie parallèle lorsqu'un bit «un» est détecté à la sortie du circuit OU exclusif; et une unité de traitement pour décoder les configurations chargées dans le registre et les transmettre à une unité sortie de données telle qu'une imprimante.

Une autre caractéristique importante de l'invention consiste en un arrangement simple permettant une autosynchronisation rapide et efficace.

L'invention est expliquée ci-après en référence aux figures suivantes:

La fig. 1 est un schéma donnant une représentation générale de l'invention.

La fig. 2 représente un exemple d'unité de génération de séquence utilisée dans l'invention.

La fig. 3 est un tableau montrant la séquence de «longueur maximale» et les configurations uniques obtenues respectivement sur la sortie série et la sortie parallèle de l'unité de génération de séquence de la fig. 2.

La fig. 4 représente une variante de réalisation de l'unité de génération de séquence.

La fig. 5 représente une séquence et cette même séquence déphasée de façon à montrer les bits différents des deux séquences.

La fig. 6 est le schéma d'un circuit de coïncidence utilisé dans un mode de réalisation de l'invention.

La fig. 7 est le schéma d'un circuit de coïncidence utilisé dans un autre mode de réalisation de l'invention.

La fig. 8 est un schéma représentant un exemple de réalisation d'un système de transmission selon l'invention.

La fig. 9 est un schéma représentant un dispositif de réception adapté au système de transmission de l'invention.

Les fig. 10A et 10B représentent les arrangements côté transmission et côté réception destinés à l'autosynchronisation du dispositif de réception de la fig. 9.

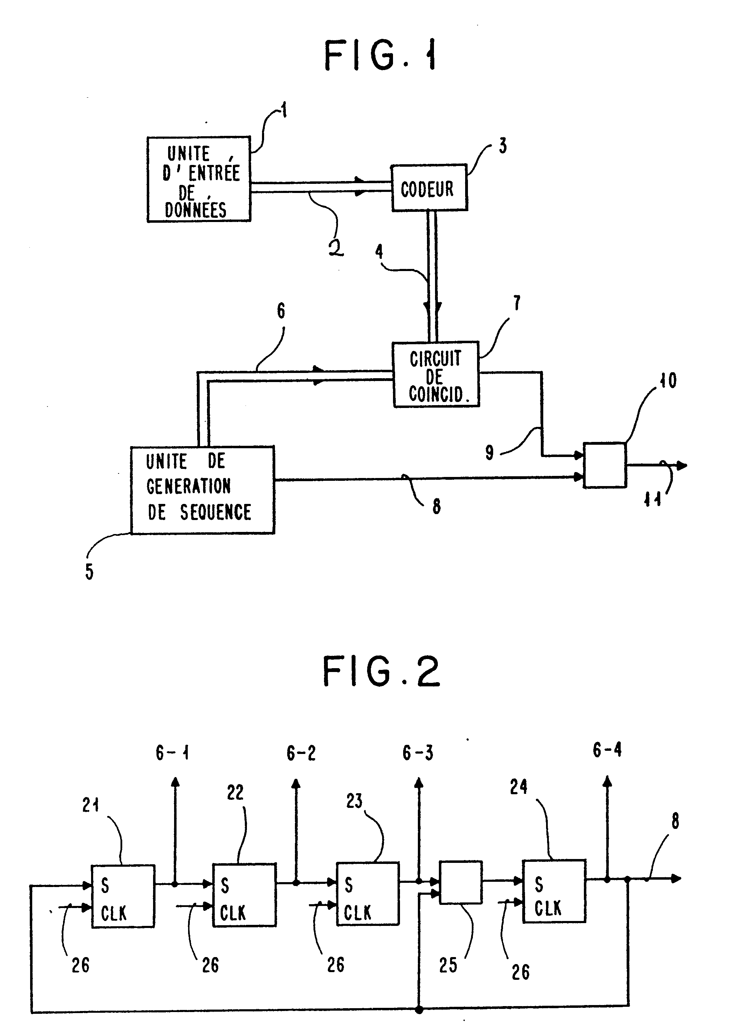

La fig. 1 est un schéma représentant le système de transmission selon la présente invention.

L'unité d'entrée de données 1 est une unité du genre clavier à touches où chaque touche correspond à un point d'entrée de données. L'entrée de données a lieu à chaque fois qu'une des touches est actionnée en activant le point d'entrée correspondant. Cette activation qui peut être due à un contact ohmique, à un changement de capacité ou à toute autre modification d'un paramètre du point d'entrée, alors pour effet qu'un des points d'entrée et un seul est générateur d'un élément d'information binaire, par exemple un bit «un», parmi une pluralité de points d'entrée se trouvant tous dans la condition binaire opposée, par exemple «zéro».

Au fur et à mesure que des points d'entrée sont activés dans l'unité d'entrée de données 1, les données (sous forme de bits «un») sont envoyées par le bus 2 à un codeur 3 qui code chaque bit reçu en une représentation binaire de la valeur associée au point d'entrée activé correspondant. Comme on va le voir, le nombre de lignes de bits du bus 4 fournissant la représentation binaire est fonction de la séquence engendrée par l'unité de génération de séquence 5.

L'unité de génération de séquence 5 fournit de façon synchrone et répétitive une séquence dite de «longueur maximale». Cette séquence de bits, dont le principe est expliqué dans le livre intitulé «Error-Correcting Codes» de W.W. Peterson à la page 224, présente un certain nombre de propriétés utilisées dans la présente invention.

Avant de décrire complètement la fig. 1 représentant le système de transmission selon l'invention, il est bon de donner une explication détaillée d'un exemple d'unité de génération de séquence en relation avec la fig. 2. Comme on le voit sur la fig. 2, l'unité de génération de séquence est composée de quatre bascules bistables 21, 22, 23 et 24 et d'un circuit OU exclusif 25 placé entre la bascule 23 et la bascule 24. Les bascules sont connectées de telle sorte que la sortie de la bascule 21 est reliée à l'entrée d'enclenchement de la bascule 22; la sortie de la bascule 22 est reliée à l'entrée d'enclenchement de la bascule 23; la sortie de la bascule 23 est reliée à une des entrées du circuit OU exclusif 25; la sortie du circuit OU exclusif 25 est reliée à l'entrée d'enclenchement de la bascule 24 et la sortie de la bascule 24 est reliée d'une part à la deuxième entrée du circuit OU exclusif 25 et d'autre part à l'entrée d'enclenchement de la bascule 21. L'ensemble des lignes de sorties 6-1, 6-2, 6-3 et 6-4 des quatre bascules constitue le bus 6 de l'unité de génération de séquence 5 alors que la sortie de la bascule 24 est la ligne de sortie 8 de la fig. 1. Chacune des bascules a son entrée d'horloge connectée à une horloge commune 26, non représentée, qui fournit de façon synchrone les impulsions d'horloge permettant de faire évoluer l'état des bascules.

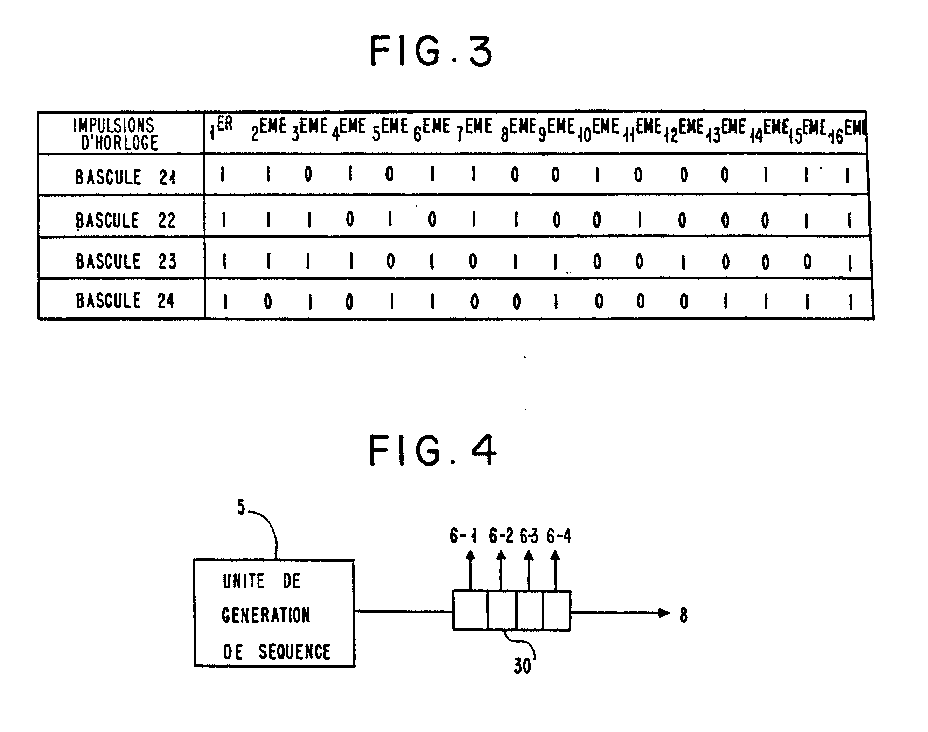

Supposons qu'au départ les quatre bascules 21 à 24 soient enclenchées. Dans ce cas les quatre lignes de sortie 6-1 à 6-4 fournissent une configuration de quatre bits «un». Cette configuration change au fur et à mesure que les bascules changent d'état avec chaque impulsions d'horloge, ainsi qu'il est représenté sur la fig. 3.

On s'aperçoit sur la fig. 3 qu'à la seizième impulsion, la configuration des bits de sortie des quatre bascules est identique à celle existant à la première impulsion, c'est-à-dire quatre «un». Bien évidemment, les configurations des dix-septième, dix-huitième, etc., non représentées, seront identiques aux configurations des deuxième, troisième, etc. En outre chacune des quinze configurations de la première à la quinzième impulsions d'horloge est différente des autres et forme l'une des quinze configurations possibles obtenues avec quatre bits si l'on excepte la configuration formée de zéros. Il est à noter que cette configuration (tous zéros) ne peut pas se produire puisque toutes les configurations suivantes seraient identiquement composées de zéros. Par conséquent, le bus 6 fournit de façon répétitive, une suite de quinze configurations à quatre bits, toutes différentes les unes des autres.

On pourrait obtenir le même résultat que précédemment, à savoir une séquence répétitive de quinze configurations différentes à quatre bits, en mémorisant dans un registre à décalage la sortie de la bascule 24 (fig.4). Les suites succes-

## Page 5

sives de quatre bits dans la séquence obtenue à la sortie de la bascule 24 sont en effet différentes et répétitives de quinze en quinze. Dans ce cas la ligne 8 est à la sortie du registre à décalage 30 et le bus 6 est constitué des lignes de sortie de chacun des étages du registre à décalage.

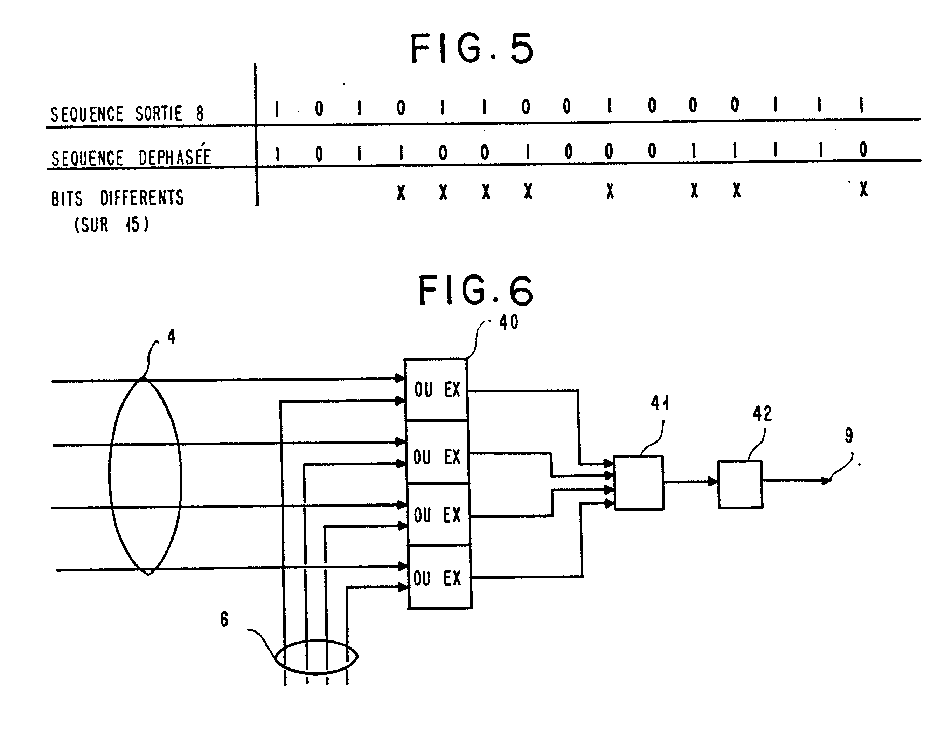

Une des propriétés remarquables de la séquence précédente est montrée sur la fig. 5. Si l'on compare, bit à bit, la séquence fournie sur la sortie 8 et cette même séquence déphasée d'un nombre quelconque de bits, le nombre de bits différents est égal à 8, quelle que soit la valeur du déphasage entre les deux séquences. Cette propriété est constante pour toutes les séquences dites de «longueur maximale». Elle équivaut à dire qu'il existe $2^{N-1}$ bits différents entre la séquence de longueur $2^N-1$ et la même séquence déphasée d'un nombre quelconque de bits. Ainsi si l'unité de génération de séquence de la fig. 2 ne comportait que trois bascules, la séquence serait de 7 bits et tout déphasage entraînerait un nombre de bits différents égal à 4. De la même façon avec une unité de génération de séquence comportant maintenant cinq bascules, la séquence obtenue serait de 31 bits et tout déphasage aboutirait à un nombre de bits différents égal à 16 entre deux séquences.

Cette propriété est importante pour l'invention, comme on va le voir. Considérons qu'à la réception des données transmises à partir du système de transmission de la fig. 2, il existe une unité de génération de séquence identique à l'unité de génération de séquence 5 et en phase avec cette dernière. En l'absence de données en provenance de l'unité 1, les séquences de bits produites par les deux unités de génération de séquence sont identiques tant que ces unités sont en phase. Dès qu'un déphasage se produit, les séquences produites par les deux unités sont différentes. Le déphasage quel qu'il soit, se manifeste par 8 bits différents sur les 15 bits de la séquence.

Si maintenant, on altère un des 15 bits de la séquence générée par l'unité 5, deux possibilités peuvent se produire. Soit les deux unités de génération (transmission et réception) sont en phase et un seul bit est différent entre les deux séquences, soit les deux unités sont déphasées et dans ce cas le bit altéré est un des 8 bits différents entre les deux séquences ou pas, ce qui aboutit à avoir 7 ou 9 bits différents. Le même raisonnement peut s'appliquer si on altère 2, 3 bits ou plus de la séquence. Le tableau suivant résume les différentes possibilités qui peuvent se présenter lorsqu'on transmet des données par altération de bits de la séquence.

| Nombre de bits altérés | Bits différents | |
|---|---|---|
| | Unités en phase | Unité déphasées |
| 0 | 0 | 8 |
| 1 | 1 | 7 à 9 |
| 2 | 2 | 6 à 10 |
| 3 | 3 | 5 à 11 |

| Nombre de bits altérés | Bits différents | |
|---|---|---|
| | Unités en phase | Unité déphasées |
| 4 | 4 | 4 à 12 |
| 5 | 5 | 5 à 13 |

Il apparaît du que, pour chacune des hypothèses le nombre de bits différents inclut le nombre 8 correspondant à une séquence non altérée (pas de point d'entrée activé) mais déphasée.

On voit donc qu'il sera facile de détecter un déphasage entre les deux unités si seulement 1, 2 ou 3 bits sont altérés. En effet, dans ces trois hypothèses, le nombre de bits différents en cas de déphasage est au minimum égal à 5, alors que s'il n'y a pas déphasage, 3 bits seulement sont altérés (hypothèse d'altération à 3 bits).

Par contre, il y aurait incertitude dans le cas où l'altération se ferait sur 4 bits ou plus puisqu'un déphasage éventuel risquerait de passer inaperçu, le nombre de bits différents entre les deux séquences pouvant être identique qu'il y ait déphasage ou pas.

Il est donc intéressant de se limiter à l'altération par les données d'un nombre de bits de la séquence, inférieur au nombre limite (égal à $2^{N-2}$ avec des séquences de $2^{N-1}$ à partir duquel il y aurait incertitude en cas de déphasage. Ainsi avec l'unité de génération de séquence 5 de la fig. 1, il est intéressant d'altérer 1, 2 ou 3 bits sur les 15 de la séquence.

Comme on l'a vu précédemment, les configurations de bits obtenues sur les sorties des bascules composant l'unité de génération de séquence 5 sont uniques en ce sens qu'elles sont différentes pour chaque bit de la séquence. Ces configurations sont envoyées par le bus 6 au circuit de coïncidence 7. Lorsqu'il y a coïncidence entre la configuration de bits 6-1 à 6-4 (voir fig. 2) et la représentation codée du point d'entrée activé de l'unité d'entrée de données 1, un bit «un» est transmis sur la ligne 9. Dans ce cas le bit de la séquence, fourni sur la ligne 8 par l'unité de génération de séquence 5, est «altéré» par le circuit OU exclusif 10 avant d'être transmis en sortie sur la ligne 11; c'est-à-dire que si le bit de la séquence est égal à «un», un «zéro» est transmis sur la ligne 11 et inversement un bit «un» est transmis si le bit de la séquence est égal à «zéro». Evidemment en l'absence d'activation d'un des points d'entrée de l'unité 1, le bit transmis sur la ligne 11 est de même valeur que le bit de la séquence sur la ligne 8.

Il est à noter que la fréquence de l'horloge 26 est telle que la durée d'une séquence (de 15 bits pour la fig. 2) est bien inférieure à la durée minimale pendant laquelle un point d'entrée est activé, de sorte qu'une séquence ne puisse pas être altérée par l'activation de plus d'un point d'entrée.

Toutefois, comme on l'a expliqué précédemment, il est possible d'altérer plusieurs bits de la séquence sans dépasser un nombre limite à partir duquel il existe une incertitude en cas de déphasage. Par exemple avec l'unité de génération de séquence de la fig. 2, on peut altérer 1, 2 ou 3 bits ce qui correspond à un nombre maximal de points d'entrée égal respectivement à 15, 105 ou 455.

En utilisant une unité de génération de séquence comportant cinq bascules, l'altération de 1, 2 ou 3 bits correspond à un nombre maximal de points d'entrée égal respectivement à 31, 465, 4495. Par contre si l'unité ne comporte que trois bascules, on ne peut altérer qu'un bit si on ne veut pas risquer l'incertitude en cas de déphasage. Dans ce cas le nombre maximal de points d'entrée est sept.

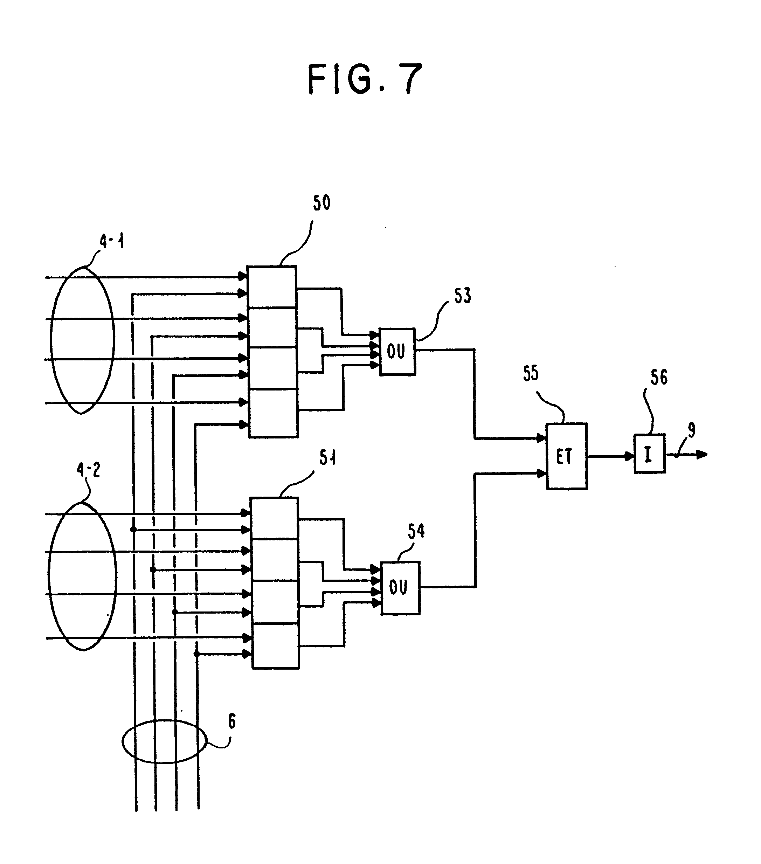

En liaison avec l'unité de génération de séquence à quatre bascules de la fig. 2, le circuit de coïncidence (voir fig. 1) est décrit en se reportant aux fig. 6 et 7.

La fig. 6 représente un circuit de coïncidence utilisé avec une unité d'entrée ayant un maximum de 15 points d'entrée. Dans ce cas le bus 4 en provenance du codeur 3 (fig. 1) comporte quatre lignes fournissant les représentations binaires des points d'entrée. Ces quatre lignes sont associées respectivement aux quatre lignes du bus 6 en provenance de l'unité de génération de séquence, comme entrées de quatre circuits «OU exclusif» 40. Lorsqu'il y a coïncidence entre la configuration binaire représentative du point d'entrée activé et la configuration de sortie parallèle de l'unité de génération de séquence, les sorties des circuits OU exclusif sont toutes à zéro. Ces sorties sont connectées comme entrées d'un circuit OU 41 qui fournit dans ce cas un bit «zéro», qui est inversé dans l'inverseur 42 pour produire finalement un bit «un» sur la ligne 9. Dans tous les autres cas, au moins une des entrées du circuit OU 41 est à «un» et un bit «zéro» est transmis sur la ligne 9.

La fig. 7 représente un circuit de coïncidence utilisé avec une unité d'entrée ayant entre 16 et 105 points d'entrée. Dans ce cas le bus d'entrée 4 est divisé en deux partie 4-1 et 4-2 comportant chacune quatre lignes, l'ensemble des huit lignes fournissant les représentations binaires de points d'entrée. Chaque groupe de quatre lignes 4-1 et 4-2 est associé ligne à ligne aux quatre lignes de sortie parallèle 6 de l'unité génération de séquence, comme entrées de deux groupes 50 et 51 de circuits «OU exclusif». Comme on l'a précédemment, l'activation d'un point d'entrée fournit deux configurations binaires (sur les parties de bus 4-1 et 4-2) coïncidant avec deux des configurations de sortie à quatre bits fournies sur le bus 6. Lorsqu'il y a coïncidence, l'un ou l'autre des circuits OU 53, 54 fournit un bit «zéro» en sortie. Par conséquent, le circuit ET 55 produit un bit «zéro» en sortie, qui est lui-même inversé par l'inverseur 56 de façon à transmettre un bit «un» sur la ligne 9. Ainsi, deux bits d'une même séquence de quinze bits seront altérés du fait qu'il y a deux coïncidences au cours de cette séquence. Dans les autres cas, au moins une des entrées de chaque circuit OU 53 ou 54 est à «un», un bit «un» est donc fourni en sortie du circuit ET 55 et un bit «zéro» est alors transmis sur la ligne 9 par l'inverseur 56.

Il sera évident pour l'homme du métier que si l'unité d'entrée comporte entre 106 et 455 points d'entrée, la représentation binaire des points d'entrée en provenance du codeur comprend alors douze lignes. Il faut donc dans ce cas trois groupes de quatre circuits «OU exclusif» et trois circuits OU fournissant l'altération de trois bits d'une même séquence.

De même, bien que les fig. 6 et 7 représentent un bus 6 à quatre lignes provenant de l'unité de génération de séquence à quatre bascules de la fig. 2, d'autres architecture sont possibles. Avec une unité de génération de séquence à cinq bascules, le bus 6 comporterait cinq lignes, ce qui correspondrait à un nombre maximal de points d'entrée égal à 31 pour la fig. 6 et égal à 465 pour la fig. 7.

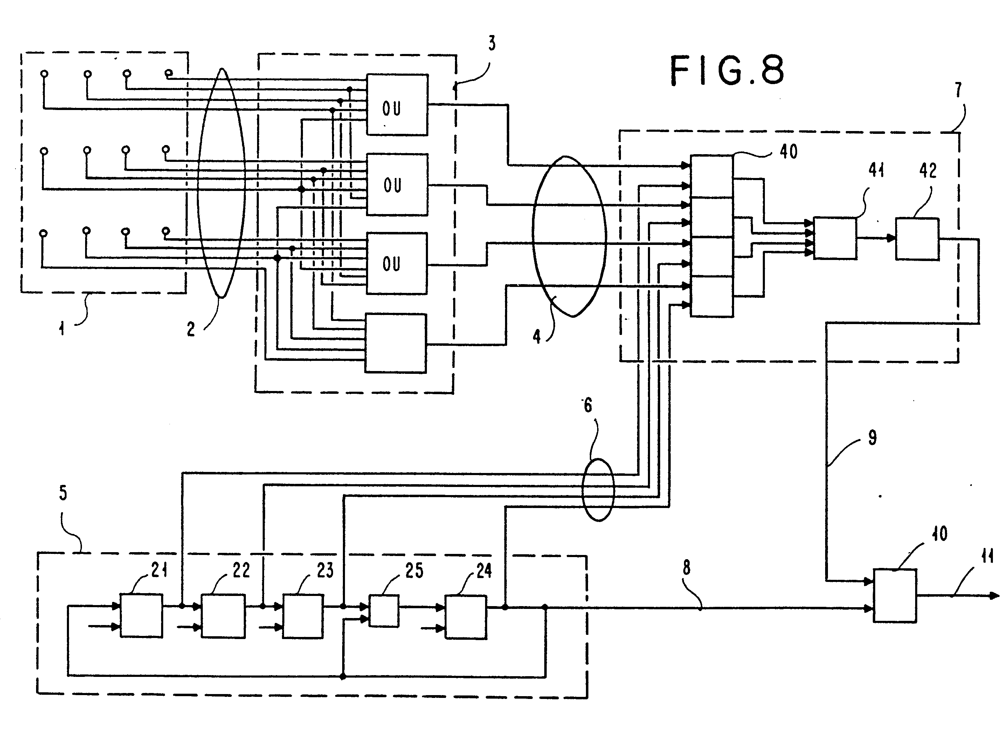

Un système de transmission selon la présente invention est représenté sur la fig. 8. Sur cette figure, les références des éléments représentés sont les mêmes que celles des mêmes éléments sur les figures précédentes.

L'unité 1 est ici une unité d'entrée par points du type clavier téléphonique comportant douze touches, dix pour les chiffres de 0 à 9, et deux touches spéciales. Les contacts (non représentés) des points d'entrée de l'unité 1 sont connectés au codeur 3 par le bus à douze lignes 2. Le codeur 3, fournit en sortie sur le bus à quatre lignes 4, les configurations binaires à quatre bits représentatives de chaque point d'entrée de l'unité 1. Il est à noter que bien qu'ici le codeur 3 est constitué de quatre circuits OU, il est possible d'utiliser tout autre codeur sans sortir du cadre de l'invention. Comme expliqué précédemment, chaque configuration fournie sur le bus 4 est comparée dans le circuit de coïncidence 7 avec la sortie parallèle sur le bus 6 de l'unité de génération de séquence 5, formée des sorties des quatre bascules constituant cette unité. Lorsqu'il y a coïncidence, un bit «un» transmis sur la ligne 9 vient alors altérer, dans le circuit OU exclusif 10, le bit engendré à cet instant sur la ligne 8 par l'unité de génération de séquence. Ce bit altéré est enfin transmis sur la ligne 12.

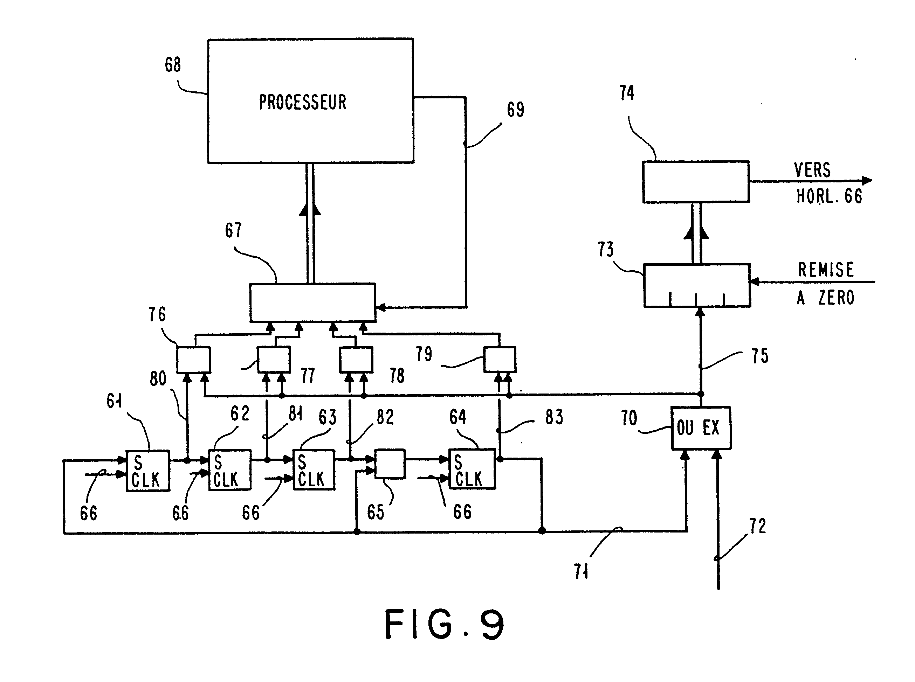

Un dispositif de réception adapté au système décrit précédemment, est représenté sur la fig. 9. Comme on le voit ce dispositif comprend une unité identique à l'unité de génération de séquence du système de transmission de la fig. 9, c'est-à-dire comportant quatre bascules 61, 62, 63 et 64, rebouclées sur elles-mêmes, avec un circuit «OU exclusif» interposé entre la troisième et la quatrième bascule. Une horloge 66, en phase avec l'horloge 26 fournit les impulsions d'horloge permettant de faire progresser la séquence dite de «longueur maximale» fournie sur la ligne 71. Les bits de la séquence engendrée sont transmis à l'entrée du circuit «OU exclusif» 70 qui reçoit sur son autre entrée 72 les bits transmis par le système de transmission de la fig. 8.

En supposant que la séquence engendrée sur la ligne 71 soit identique à celle engendrée par l'unité de génération de séquence 5, c'est-à-dire qu'il n'y ait pas déphasage, les deux entrées 71 et 72 du circuit «OU exclusif» sont identiques et la sortie 75 est à «zéro». Lorsqu'un bit altéré est reçu sur la ligne 72, le circuit 70 fournit un bit «un» sur sa sortie 75. Ce bit «un» permet l'ouverture des quatre portes ET 76, 77, 78 et 79, ce qui permet aux bits fournis sur les sorties en parallèle 80, 81, 82 et 83 d'être chargés dans le registre 67 à quatre bits. Le processeur 68 peut alors lire par la ligne de commande 69, le contenu du registre 68 de façon à l'envoyer comme entrée dans une table fournissant les codes «caractère» correspondant aux différentes configurations reçues. Mais le traitement par le processeur ne fait pas partie de l'invention et ne sera donc pas décrit ici.

La sortie 75 du circuit «OU exclusif» 70 incrémente un compteur à quatre bits 73. Ce compteur est donc incrémenté par tout bit altéré reçu sur la ligne 72, et remis à zéro par un circuit de remise à zéro (non représenté) à la fin de chaque intervalle de temps correspondant à la durée d'une séquence de «longueur maximale». Lorsqu'il y a un problème de déphasage entre l'unité de génération de séquence du système de transmission et la même unité du dispositif de réception, le compteur est incrémenté un nombre de fois supérieur ou égal à sept comme cela a été expliqué plus avant. Dans ce cas le décodeur 74 fournit un signal de commande à l'horloge 66. Ce signal de commande bloque alors l'horloge pendant un temps bit. Ceci est répété tant que le décodeur 74 détecte un nombre de bits altéré au moins égal à sept jusqu'à ce qu'il y ait de nouveau synchronisation entre les deux unités, auquel cas il n'y a plus qu'un bit altéré (ou pas) pendant la durée de chaque séquence. Bien entendu le temps de synchronisation peut correspondre à la réception de plusieurs caractères erronés. Bien que les opérations de resynchronisation, sous la commande du processeur, ne constituent pas la caractéristique essentielle de l'invention, l'accent est mis sur le fait que le principe même de l'invention d'utiliser des séquences de «longueur maximale» permet de détecter facilement et rapidement un déphasage entre l'émission et la réception des données, ce qui n'est pas toujours le cas dans les systèmes de l'art antérieur.

Bien que le mode de réalisation expliqué en liaison avec les fig. 8 et 9 comporte une unité d'entrée à douze touches, il est évident que d'autres réalisations sont possibles sans sortir de l'invention. Ainsi, avec la même unité de génération de séquence à quatre bascules, mais un nombre de points d'entrée compris entre 16 et 105 comme pour un terminal interactif d'un système de traitement de données, le codeur 3 (fig. 8) serait différent de même que le circuit de coïncidence 7 qui pourrait être celui représenté sur la fig. 7. De même dans la fig. 9, le registre 67 comporterait huit positions de bits au lieu de quatre et serait chargé en deux fois.

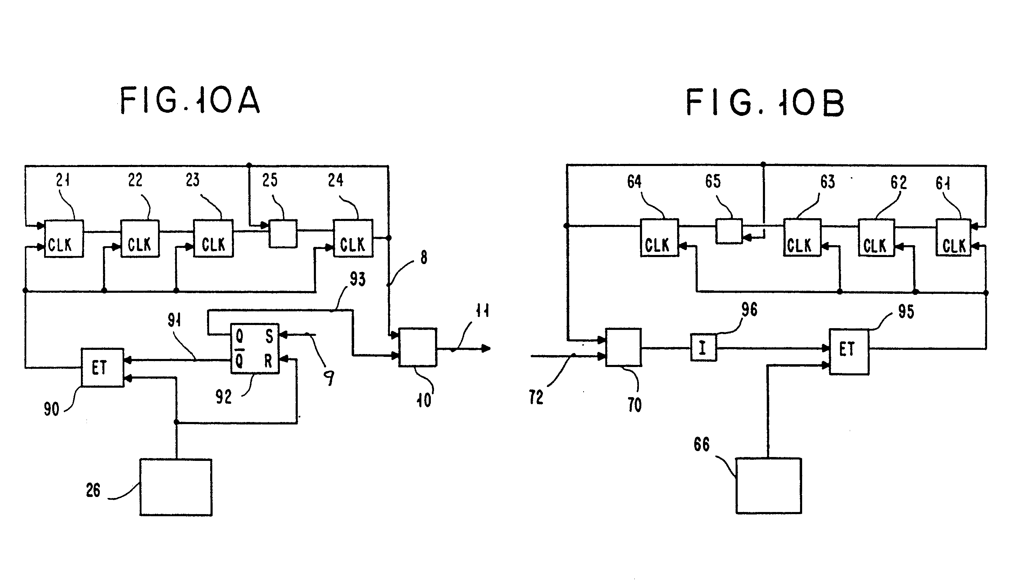

Les fig. 10A et 10B représentent une caractéristique importante de l'invention, à savoir la procédure d'autosynchronisation en cas de déphasage entre l'unité de génération de séquence du système de transmission et la même unité côté réception.

Les quatre bascules 21, 22, 23 et 24 de l'unité de génération de séquence du système de transmission ont été représentées sur la fig. 10A avec leur entrée d'horloge connectée à la sortie d'un circuit ET 90 dont les deux entrées sont constituées d'une part de la sortie de l'horloge 26 et d'autre part de la sortie inversée ($\bar{Q}$) d'une bascule 92. La ligne 9 en sortie du circuit de coïncidence 7, au lieu d'être directement connectée à l'entrée du circuit «OU exclusif» 10, est connectée à l'entrée d'enclenchement de la bascule 92. C'est la sortie Q de la bascule 92 qui est en fait connectée au circuit «OU exclusif». Ainsi, lorsqu'un signal de coïncidence est fourni par la ligne 9, la bascule 92 est enclenchée et fournit un bit «un» sur la ligne (Q) 93 de façon à altérer le bit de la séquence fournie à l'autre entrée du circuit «OU exclusif» par la ligne 8. En même temps un bit «zéro» est fourni par la sortie inversée ($\bar{Q}$) de la bascule 92 sur la ligne 91 et bloque le circuit ET 90, ce qui empêche la transmission de l'impulsion d'horloge 26 destinée à faire progresser la séquence. Par conséquent la sortie de la bascule 24 sur la ligne 8 est identique pendant deux temps bit. Mais tandis que pendant le premier temps bit le bit de la séquence est altéré, il ne l'est pas pendant le deuxième temps bit du fait que la bascule 92 a été restaurée par l'impulsion d'horloge et qu'un bit «zéro» est alors fourni sur la ligne 93 au circuit «OU exclusif» 10. Cet arrangement permet donc d'introduire un retard égal à un temps bit chaque fois qu'une altération d'un bit de la séquence a lieu, le bit transmis pendant ce retard étant le bit de la séquence qui aurait été transmis auparavant s'il n'y avait pas eu altération.

L'explication donnée en liaison avec la fig. 10B permet de comprendre cette caractéristique importante qu'est l'autosynchronisation.

En effet, côté réception, l'horloge 66 ne fournit pas directement les impulsions d'horloge aux bascules 61 à 66, mais par l'intermédiaire d'un circuit ET 95. La deuxième entrée du circuit ET 95 est fournie par la sortie du circuit «OU exclusif» 70 inversée par l'inverseur 76. Lorsque le dispositif de réception est en phase avec le système de transmission et qu'un bit non altéré est reçu à l'entrée de réception 72, le circuit 70 fournit un bit «zéro». Ce bit est inversé par le circuit 96, ce qui rend passant le circuit ET 95 aux impulsions d'horloge 66. Losqu'un bit altéré est reçu sur la ligne 72, le circuit «OU exclusif» fournit un bit «un» qui est inversé par l'inverseur 96, ce qui bloque le circuit ET 95. Par conséquent, pendant le temps bit qui suit le bit altéré, les bascules 61–64 ne reçoivent pas d'impulsions d'horloge, et le même bit de la séquence est fourni à l'entrée du circuit 70. Ce bit correspond forcément au bit retardé et non altéré reçu sur la ligne 72. Le circuit ET se trouve donc de nouveau passant et permet aux impulsions d'horloge de faire progresser la séquence.

Lorsqu'il y a déphasage, on a vu plus haut qu'un nombre important de bits (supérieur à un seuil) était altéré. Avec l'arrangement de la fig. 10B, chacun de ces bits va causer un retard d'un temps bit au cours duquel la progression de la séquence au travers des bascules 61–64 ne se fera pas, jusqu'au moment où la synchronisation aura été récupérée, auquel cas, ce retard ne se produira que pour les bits altérés à l'émission, comme il vient d'être expliqué. Le temps employé à récupérer la synchronisation est évidemment très court, de l'ordre de deux séquences au maximum. Ainsi dans l'exemple de réalisation de la fig. 8, un déphasage provoque une altération d'au moins sept bits ce qui, à raison d'un bit de retard pour chaque bit différent, nécessite un temps d'autosynchronisation s'étalant sur deux séquences pour un déphasage maximal de quatorze bits.

Bien que l'invention ait été décrite en référence à une unité d'entrée du type clavier, l'homme de métier comprendra aisément que toute entrée par points autre qu'un clavier, par exemple l'ensemble des points de mesure numérique d'un procédé industriel automatisé, entre dans le cadre de la présente invention.

## Revendications

1. Système de transmission de données par génération de séquences répétitives comportant une unité d'entrée de données (1) par activation séquentielle de points parmi une pluralité de points d'entrée et un circuit de représentation numérique (3) de la position du point d'entrée, composé d'une unité de transmission de données et d'une unité de réception de données ladite unité de transmission de données comprenant:
– une unité de génération de séquences répétitives (5) pour fournir de façon synchrone des bits diposés selon une séquence répétitive sur une sortie série (8) et une configuration de bits pour chaque bit de la séquence sur une sortie parallèle (6), ladite configuration de bits étant différente pour chaque bit de ladite séquence,
– un circuit de coïncidence (7) connecté d'une part à la sortie dudit circuit de représentation numérique et d'autre part à la sortie parallèle de ladite unité de génération de séquence, pour fournir un signal (9) de coïncidence lorsqu'il y a coïncidence entre la représentation binaire fournie à la sortie dudit circuit de représentation numérique et la configuration de bits fournie sur la sortie parallèle de ladite unité de génération de séquence, et
– un circuit OU exclusif (10) connecté en entrée d'une part à la sortie (9) dudit circuit de coïncidence et d'autre part à la sortie série (8) de ladite unité de génération de séquence (5), de façon à fournir en sortie les séquences de bits engendrés par ladite unité de génération de séquence excepté lorsque ledit circuit de coïncidence fournit un signal de coïncidence indiquant qu'un des points d'entrée de ladite unité d'entrée a été activé, auquel cas le bit à transmettre est inversé;
ledit système étant caractérisé en ce que ladite unité de réception de données comprend:
– une unité de génération de séquence (61–65) identique à l'unité de génération de séquence (5) de ladite unité de transmission, comportant également une sortie série (71) fournissant les mêmes séquences répétitives et une sortie parallèle (80–83) fournissant les mêmes configurations binaires,
– un circuit OU exclusif (70) connecté en entrée à la ligne de transmission de données (72) provenant de ladite unité de transmission de données et à la sortie série (71) de l'unité de génération de séquence (61–65) de façon à fournir en sortie (75) un bit «zéro» lorsqu'il n'y a pas de données transmises et un bit «un» dès qu'un bit a été altéré indiquant la présence d'un bit de données,
– un registre (67) pour charger la configuration binaire fournie sur ladite sortie parallèle lorsqu'un bit «un» est détecté à la sortie du circuit OU exclusif (70), et
– une unité de traitement (68) pour décoder les configurations chargées dans ledit registre et les transmettre à une unité de sortie de données telle qu'une imprimante.

2. Système selon la revendication 1 dans lequel l'unité de génération de séquence (5) de ladite unité de transmission de données est un générateur de séquences dites de «longueur maximale» composé de bascules en série rebouclées sur elles-mêmes, ladite sortie parallèle (6) étant formée des sorties de toutes les bascules et ladite sortie série (8) étant la sortie de l'une d'entre elles.

3. Système selon la revendication 2 dans lequel la séquence de «longueur maximale» fournie sur ladite sortie série (8) est envoyée dans un registre à décalage (30) comportant autant d'étages qu'il y a de bascules dans ledit générateur de séquences (5), ladite sortie parallèle étant formée de l'ensemble des sorties des étages dudit registre à décalage.

4. Système selon la revendication 2 ou 3 dans lequel ledit générateur de séquence de «longueur maximale» (5) est du type à N bascules, la N-1$^{ième}$ bascule étant séparée de la N$^{ième}$ bascule par une circuit OU exclusif (25) dont les deux entrées sont les sorties des N-1 et N$^{ièmes}$ bascules, de telle sortie que la séquence de «longueur maximale» fournie sur ladite sortie série (8) est une séquence de $N^N-1$ bits et ladite sortie parallèle (6) fournit les différentes configurations binaires à N bits exceptée la configuration formée de quatre zéros.

5. Système selon la revendication 4 dans lequel ledit générateur de séquence de «longueur maximale» est formé de quatre bascules (21–24), N étant à 4, de sorte que la séquence de «longueur maximale» est formée de 15 bits, et ladite sortie parallèle fournit 15 configurations binaires à quatre bits.

6. Système selon l'une quelconque des revendications précédentes dans lequel l'unité d'entrée de données (1) est un clavier à touches.

7. Système selon l'une quelconque des revendications 1 à 5 dans lequel l'unité d'entrée (1) est formée des points d'entrée de mesure numérique d'un procédé industriel automatisé.

8. Système selon l'une quelconque des revendications précédentes dans lequel ladite unité de réception de données comprend un moyen de resynchronisation (73, 74) pour resynchroniser ladite unité de génération de séquence (61-65) lorsque le nombre de bits «un» fournis à la sortie dudit circuit OU exclusif (70) dépasse un seuil prédéterminé indiquant que ladite unité de génération de séquence n'est plus en phase avec celle (5) de ladite unité de transmission de données.

9. Système selon l'une quelconque des revendications précédentes dans lequel ladite unité de transmission de données comporte un circuit de retard de transmission (90, 92) introduisant un retard d'un temps bit chaque fois qu'un des bits de la séquence est altéré de façon qu'un bit altéré de la séquence transmise soit suivi d'un bit de valeur binaire opposée, et ladite unité de réception de données comprend un circuit de retard de réception (95, 96) introduisant un retard d'un temps bit à chaque détection d'un bit altéré, de telle sortie qu'en présence d'un déphasage entre lesdites unités de génération de séquence de ladite unité de transmission de données et ladite unité de réception de données, auquel cas le nombre de bits altérés de la séquence dépasse un seuil prédéterminé, chaque bit altéré à cause du déphasage donne lieu à retard d'un temps bit ce qui permet à ladite unité de réception de données de se resynchroniser automatiquement avec ladite unité de transmission de données.

## Patentansprüche

1. Datenübertragungssystem durch Generierung von Repetiersequenzen mit einer Dateneingabeeinheit (1), die eine sequentielle Aktivierung von verschiedenen, aus einer Vielzahl von Eingabepunkten herausgegriffenen Punkten bewirkt, und einer Schaltung (3) zur digitalen Darstellung der Eingabepunktlage, wobei das Datenübertragungssystem aus einer Datenübermittlungseinheit und einer Datenempfangseinheit besteht und diese Datenübermittlungseinheit umfasst:
– eine Einheit zur Generierung von Repetiersequenzen (5), um synchron Bits zu erstellen, die nach einer Repetiersequenz an einem seriell geschalteten Ausgang (8) anstehen, sowie für jedes Bit der Sequenz an einem parallelgeschalteten Ausgang (6) eine Bitkonfiguration, die für jedes Bit der genannten Sequenz verschieden ist,
– eine Koinzidenzschaltung (7), die einerseits mit dem Ausgang der genannten digitalen Darstellungsschaltung und andererseits mit dem parallelgeschalteten Ausgang der genannten Einheit zur Generierung von Repetiersequenzen verbunden ist, um ein Koinzidenzsignal (9) zu erstellen, wenn Koinzidenz zwischen der binären, am Ausgang des genannten anstehenden Darstellungsschaltung und der am parallelgeschalteten Ausgang der genannten Sequenzgenerierung anstehenden Bitkonfiguration besteht, und
– eine exklusive ODER-Schaltung (10), am Eingang einerseits mit dem Ausgang (9) der genannten Koinzidenzschaltung und andererseits mit dem seriellen Ausgang (8) der genannten Sequenzgeneriereinheit (5) verbunden, um so als Ausgang die von der genannten Sequenzgeneriereinheit erzeugten Bitsequenzen zu erstellen, ausser wenn die genannte Koinzidenzschaltung ein Koinzidenzsignal erstellt, das angibt, dass einer der Eingangspunkte der genannten Eingangseinheit aktiviert wurde, in welchem Falle das zu übermittelnde Bit umgekehrt wird;
wobei das genannte System dadurch gekennzeichnet ist, dass die genannte Datenempfangseinheit umfasst:
– eine Sequenzgeneriereinheit (61-65), identisch mit der Sequenzgeneriereinheit (5) der genannten Übermittlungseinheit, die ebenfalls einen seriellen Ausgang (71) aufweist, der dieselben Repetiersequenzen und einen parallelgeschalteten Ausgang (80-83) umfasst, die dieselben binären Konfiguration erstellen,
– eine exklusive ODER-Schaltung (70), am Eingang mit der von der genannten Datenübermittlungseinheit kommenden Datenübermittlungslinie (72) und mit dem seriellen Ausgang (71) der Sequenzgeneriereinheit (61-65) verbunden, um derart als Ausgang (75) ein «Null»-Bit zu erstellen, wenn keine Daten übermittelt werden, und ein «Eins»-Bit, sobald ein Bit geändert wurde und demzufolge die Vorlage eines Datenbits anzeigt,
– ein Register (67), um die dem genannten parallelgeschalteten Ausgang erstellte binäre Konfiguration zu laden, sobald ein «Eins»-Bit am Ausgang der exklusiven ODER-Schaltung (70) erkannt wird,
– eine Verarbeitungseinheit (68), um die in das genannte Register gespeicherten Konfigurationen zu decodieren und sie einer Datenausgabeeinheit, einem Drucker z.B., zu übermitteln;

2. System nach Anspruch 1, in dem die Sequenzgeneriereinheit (5) der genannten Datenübermittlungseinheit ein Sequenzgenerator sogenannter «maximaler Länge» ist, der aus seriell kreisgeschalteten Kippschaltern besteht, wobei der genannte parallelgeschaltete Ausgang (6) aus den Ausgängen aller Kippschalter besteht und der genannte serielle Ausgang (8) der Ausgang einer davon ist.

3. System nach Anspruch 2, in dem die dem genannten seriellen Ausgang (8) erstellte Sequenz «maximaler Länge» einem Schieberegister (30) übertragen wird, das soviel Stufen wie Kippschalter in dem genannten Sequenzgenerator (5) aufweist, wobei der genannte parallelgeschaltete Ausgang von der Gesamtheit der Stufenausgänge des genannten Schieberegisters gebildet wird.

4. System nach Anspruch 2 oder 3, in dem der genannte Sequenzgenerator «maximaler Länge» (5) vom Typ mit N Kippschaltern ist, wobei der Kippschalter N-1 vom Kippschalter N durch eine exklusive ODER-Schaltung (25) getrennt ist, dessen beide Eingänge die Ausgänge der Kippschalter N-1 und N sind, und zwar derart, dass die dem genannten seriellen Ausgang (8) übermittelte Sequenz «maximaler Länge» eine Sequenz von $2^N-1$ Bits ist und dass der genannte parallelgeschaltete Ausgang (6) die verschiedenen binären Konfigurationen mit N Bits erstellt mit Ausnahme der von vier Nullen gebildeten Konfiguration.

5. System nach Anspruch 4, in dem der genannte Sequenzgenerator «maximaler Länge» von vier Kippschaltern (21–24) gebildet wird, N also gleich 4 ist, so dass die Sequenz «maximaler Länge» aus 15 Bits besteht und der genannte parallelgeschaltete Ausgang 15 binäre, aus vier Nullen zusammengesetzte Konfigurationen liefert.

6. System nach irgendeinem der vorstehend angegebenen Ansprüche, in dem die Dateneingabeeinheit (1) eine Tastatur mit Drucktasten ist.

7. System nach irgendeinem der Ansprüche 1 bis 5, in dem die Dateneingabeeinheit (1) die digitalen Mess-Eingabepunkte eines automatisierten industriellen Verfahrens bildet.

8. System nach irgendeinem der vorstehend angegebenen Ansprüche, in dem die genannte Datenempfangseinheit ein Resynchronisierungsmittel (73, 74) aufweist, um die genannte Sequenzgeneriereinheit (61–65) wiederzusynchroniseiren, wenn die am Ausgang der genannten exklusiven ODER-Schaltung (70) anstehende «Eins»-Bitzahl eines vorgegebenen Schwellenwert überschreitet, was anzeigt, dass die genannte Sequenzgeneriereinheit nicht mehr in Phase mit der Einheit (5) aus der genannten Datenübermittlungseinheit liegt.

9. System nach irgendeinem der vorstehend angegebenen Ansprüche, in dem die genannte Datenübertragungseinheit eine Übermittlungs-Verzögerungsschaltung (90, 92) aufweist, die jedesmal eine einer Bitzeit entsprechende Verzögerung eingibt, wenn eins der Bits der Sequenz so geändert wird, dass ein geändertes Bit der übermittelten Sequenz von einem Bit mit entgegengesetztem binären Wert gefolgt wird, und die genannte Datenempfangseinheit eine Empfangs-Verzögerungsschaltung (95, 96) aufweist, die bei jeder Erkennung eines geänderten Bits eine einer Bitzeit entsprechende Verzögerung eingibt, so dass eine Phasenverschiebung zwischen den genannten Sequenzgeneriereinheiten der Datenübermittlungseinheit und der genannten Datenempfangseinheit festgestellt wird, wobei die Anzahl der geänderten Bits der Sequenz einen vorbestimmten Wert übersteigt und jedes geänderte Bit wegen der Phasenverschiebung eine einer Bitzeit entsprechende Verzögerung hervorruft, was es der genannten Datenempfangseinheit ermöglicht, sich automatisch wieder mit der genannten Datenübermittlungseinheit zu synchronisieren.

## Claims

1. A data transmission system wherein data are transmitted by generating repetitive sequences, comprising a data input unit (1) for inserting data by sequentially activating selected ones of a plurality of input ports, a circuit (3) for providing a digital representation of the input port position, a data transmission unit and a data reception unit, said data transmission unit including:

– a repetitive-sequence generation unit (5) for generating in a synchronous manner repetitive sequences of bits on a serial output (8) and a pattern of bits for each bit in said sequence on a parallel output (6), said bit pattern being different for each bit in said sequence,

– a coincidence circuit (7) connected to the output of said digital representation circuit and to the parallel output of said sequence generation unit for supplying a coincidence signal (9) whenever the binary representation provided on the output of said digital representation circuit coincides with the bit pattern provided on the parallel output of said sequence generating unit, and

– an Exclusive OR circuit (10) connected to the output (9) of said coincidence circuit and to the serial output (8) of said sequence generation unit (5) to provide the sequences of bits generated by said sequence generation unit except where said coincidence circuit provides a coincidence signal indicating that one of the input ports of said input units has been activated, in which case the bit to be transmitted is inverted,

said system being characterized in that said data reception unit comprises:

– a sequence generation unit (61–65) identical to the sequence generation unit (5) in said transmission unit, comprising a serial output (71) that provides the same repetitive sequences and a parallel output (80–83) that provides the same binary configurations as said unit (5),

– an Exclusive OR circuit (70) connected to the data transmission line (72) from said data transmission unit and to the serial output (71) of said sequence generation unit (61–65) to provide on its output (75) a «0» bit when no data are being transmitted and a «1» bit as soon as a bit has been altered, thereby indicating the presence of a data bit,

– a register (67) for loading therein the binary pattern provided on said parallel output whenever a «1» bit is detected at the output of said Exclusive OR circuit (70), and

– a processing unit (68) for decoding patterns loaded into said register and transmitting same to a data output unit such as a printer.

2. A system according to claim 1, characterized in that said sequence generation unit (5) in said data transmission unit generates so-called «maximum length» sequences and is comprised of series-connected flip-flops in a loop configuration, said parallel output (6) being comprised of the outputs of all of said flip-flops and said serial output (8) being the output of a single one of them.

3. A system according to claim 2, characterized in that the «maximum length» sequence provided on said serial output (8) is fed to a shift register (30) comprising as many stages as there are flip-flops in said sequence generator (5), said parallel output consisting of the outputs of all stages of said shift register.

4. A system according to claim 2 or 3, characterized in that said generator (5) of «maximum length» sequences is of the N flip-flop type, with the N-1th flip-flop being separated from the Nth flip-flop by an Exclusive OR circuit (25) the two inputs of which are the outputs of said N-1th and Nth flip-flops, wereby the «maximum length» sequence privided on said serial output (8) is a sequence of $2^N-1$ bits and said parallel output (6) provides the various N-bit binary patterns with the exception of the four-zero pattern.

5. A system according to claim 4, characterized in that said generator of «maximum length» sequences is comprised of four flip-flops (21-24), so that $N=4$, whereby the «maximum length» sequence consists of 15 bits and said parallel output provides 15 4-bit binary patterns.

6. A system according to any one of the preceding claims, characterized in that the data input unit (1) is a keyboard.

7. A system according to any one of claims 1 to 5, characterized in that the input unit (1) comprises digital input ports associated with an automated industrial process.

8. A system according to any one of the preceding claims, characterized in that said data reception unit includes resynchronization means (73, 74) for resynchronizing said sequence generation unit (61-65) where the number of «1» bits provided at the output of said Exclusive OR circuit (70) exceeds a predetermined threshold, thereby indicating that said sequence generation unit is no longer in phase with the sequence generation unit (5) in said data transmission unit.

9. A system according to any one of the preceding claims, characterized in that said data transmission unit includes a delay circuit (90, 92) that introduces a delay equal to one bit time whenever one of the bits in the sequence is altered, so that an altered bit in the sequence being transmitted is followed by a bit of the opposite binary value, and in that said data reception unit includes a delay circuit (95, 96) that introduces a delay equal to one bit time whenever an altered bit is detected, so that whenever an out-of-phase condition exists between said sequence generation unit in said data transmission unit and said data reception unit, in which case the number of altered bits in the sequence exceeds a predetermined threshold, each bit altered because of the out-of-phase condition entails a delay equal to one bit time, thereby enabling said data reception unit to be automatically resynchronized with said data transmission unit.

0 112 429

# FIG. 1

UNITE D'ENTRÉE DE DONNÉES — 1

CODEUR — 3

CIRCUIT DE COINCID. — 7

UNITE DE GENERATION DE SEQUENCE — 5

2

4

6

9

10

8

11

# FIG. 2

6-1    6-2    6-3    6-4    8

21    22    23    24

S CLK    S CLK    S CLK    25    S CLK

26    26    26    26

11

# FIG.3

| IMPULSIONS D'HORLOGE | 1ER | 2EME | 3EME | 4EME | 5EME | 6EME | 7EME | 8EME | 9EME | 10EME | 11EME | 12EME | 13EME | 14EME | 15EME | 16EME |
|---|---|---|---|---|---|---|---|---|---|---|---|---|---|---|---|---|
| BASCULE 24 | 1 | 1 | 0 | 1 | 0 | 1 | 1 | 0 | 0 | 1 | 0 | 0 | 0 | 1 | 1 | 1 |
| BASCULE 22 | 1 | 1 | 1 | 0 | 1 | 0 | 1 | 1 | 0 | 0 | 1 | 0 | 0 | 0 | 1 | 1 |
| BASCULE 23 | 1 | 1 | 1 | 1 | 0 | 1 | 0 | 1 | 1 | 0 | 0 | 1 | 0 | 0 | 0 | 1 |
| BASCULE 24 | 1 | 0 | 1 | 0 | 1 | 1 | 0 | 0 | 1 | 0 | 0 | 0 | 1 | 1 | 1 | 1 |

# FIG.4

0 112 429

# FIG.5

| SEQUENCE SORTIE 8 | 1 | 0 | 1 | 0 | 1 | 1 | 0 | 0 | 1 | 0 | 0 | 0 | 1 | 1 | 1 |
|---|---|---|---|---|---|---|---|---|---|---|---|---|---|---|---|
| SEQUENCE DEPHASÉE | 1 | 0 | 1 | 1 | 0 | 0 | 1 | 0 | 0 | 0 | 1 | 1 | 1 | 1 | 0 |
| BITS DIFFERENTS (SUR 15) | | | X | X | X | X | | X | | | X | X | | | X |

# FIG.6

# FIG. 7

FIG.8

FIG. 9

# FIG.10A

# FIG.10B

0112 429